# EUROPEAN PATENT SPECIFICATION

(11) **EP 4 200 618 B1**
(45) Date of publication and mention of the grant of the patent: **29.05.2024**
(21) Application number: 21765918.4
(22) Date of filing: 20.08.2021
(51) Int. Cl.: G01N 35/04, B01L 3/00

(54) **REAGENT CONTAINER CAP, REAGENT CONTAINER UNIT AND REAGENT KIT**
REAGENZBEHÄLTERKAPPE, REAGENZBEHÄLTEREINHEIT UND REAGENZIENKIT
COUVERCLE DE RÉCIPIENT DE RÉACTIF, UNITÉ DE RÉCIPIENT DE RÉACTIF ET TROUSSE DE RÉACTIF

(30) Priority: 24.08.2020 EP 20192325
(43) Date of publication of application: 28.06.2023
(73) Proprietor: F. Hoffmann-La Roche AG, 4070 Basel (CH); Roche Diagnostics GmbH, 68305 Mannheim (DE)
(72) Inventor: KRAMNY, Detlev, 52134 Herzogenrath (DE); HOEFFLIN, Klaus, 76698 Ubstadt-Weiher (DE); SCHULZE, Antje, 68305 Mannheim (DE); WEYMANN, Alex, 68305 Mannheim (DE)
(74) Representative: Weickmann & Weickmann PartmbB
(86) International application number: PCT/EP2021/073190
(87) International publication number: WO 2022/043228

(56) References cited:
- WO-A1-2011/020885
- US-A- 5 862 934
- US-A1- 2008 116 204
- US-A1- 2015 166 219

## Description

The present invention relates to a reagent container cap, in particular to a reagent container cap for use in an automated analyzer e.g. in the area of clinical chemistry or immunochemistry, wherein the cap is adapted to being mounted to a reagent container and to being adjustable, at least after an initial opening of the cap, between an opened state and a closed state.

The reagent container cap defines a cap interior space and has a cap opening allowing access to the cap interior space from above when the cap is in the opened state; and wherein, in the closed state of the cap, the cap interior space is open only towards a bottom side of the cap and therefore to the reagent container. Throughout this application, whenever directions or orientations are mentioned, they relate to a closed reagent container cap under normal operating conditions, the cap being oriented vertically so that the cap opening faces upward.

Different types of such reagent container caps are disclosed e.g. in document WO 2011/020885 A1 describing a hinged cap and EP 0564970 A2 describing a pierce cap. US2008/116204A1 is also prior art.

Conventionally, those caps are formed in one piece by injection molding from a single suitable thermoplastic material such as polypropylene.

The known caps are used to reliably and repeatedly open and close associated reagent containers containing a large variety of clinical samples and different chemicals.

Polypropylene, while being cost-effective and providing the mechanical properties necessary for obtaining e.g. a reliable hinge or a stable attachment to the reagent container, can be damaged by some of the more aggressive solvents used for specific tests. On the other hand, plastic materials that are more resistant to these solvents can be considerably more expensive and/or do not provide the requested mechanical properties.

Against this background, the objective problem of the invention is to improve the known reagent container caps in view of an optimization of cost and performance of the cap as a whole.

This problem is solved by a reagent container cap with the features of claim 1. According to the invention, the reagent container cap comprises, preferably consists of, a main portion and an insert portion that are permanently connected to each other and made from different materials, wherein, when the cap is in the closed state, the cap interior space comprises a region which is delimited circumferentially and towards the upper side of this region completely and exclusively by surfaces of the insert portion.

This makes it possible that only the insert portion of the cap is in connection with the interior of the reagent container when the cap is mounted to the reagent container and the cap is closed. Due to this construction, the materials of the different portions of the cap can be chosen in view of the specific performances requested for the different portions while still providing a cost-effective solution.

In this context, "permanently connected" is to be understood in that the inset portion cannot be separated from the main portion without destroying the cap.

According to a specific embodiment of the invention, in order to improve chemical stability and/or the sealing properties of the cap without compromising its mechanical performance, the main portion comprises a main portion material and the insert portion comprises an insert portion material which is more resistant to a given solvent, in particular a given organic solvent or a mixture of a given organic solvent with water, and/or more flexible than the main portion material. The given organic solvent can be selected from the group consisting of methanol (MeOH), ethanol, propanol, isopropanol, acetonitrile (ACN), ethyl acetate, methyl chloride (MeCI), benzene, n-haptene, isooctane, acetone, polyethylene, dimethyl sulfoxide (DMSO), preferably the organic solvent is methanol (MeOH) or acetonitrile (ACN),.

The main portion material can be chosen mainly based on the mechanical requirements such as sufficient rigidity.

In particular, the main portion (or "hard" component) can be made completely from the main portion material and the insert portion (or "soft" component) can be made from one or several insert portion materials, wherein each insert portion material is more resistant to a given solvent and/or more flexible than the main portion material.

According to a specific embodiment of the invention, the main portion material is polypropylene (PP), e.g. Purell HP548N and the insert portion material is a thermoplastic olefin (TPO) or a low-density polyethylene (LDPE), e.g. Purell 2007H. The person skilled in the art is aware to select a main portion material and an insert portion material according to the requirements that both materials get a strong bonding during the thermoplastic injection molding.

The cap can be made for example by multi material injection molding.

The main portion and the insert portion can have interlocking structures adapted to engage with each other in order to fixedly attach the insert portion to the main portion, even if those are made from different materials that do not bond well.

In order to improve the sealing between the reagent container cap and the reagent container, the reagent container cap can comprise an annular gap formed between the insert portion and the main portion, the annular gap being adapted to receive an upper end of the reagent container. Furthermore, this configuration makes it even less likely that parts of the reagent container cap made from the main portion material come into contact with the content of the reagent container on which the cap is mounted.

For ease of assembly, the main portion of the reagent container cap can comprise an attachment structure, in particular a snap structure or a thread structure, which is adapted to attach the reagent container cap to a circumferential wall of the reagent container from the outside.

In particular, the attachment structure formed in the main portion can comprise an arrangement of snap hooks protruding into the cap interior space below the peripheral gap, the arrangements of snap hooks being adapted to hold a rim on the upper end of the reagent container in the peripheral gap when the reagent container cap is mounted to the reagent container. This arrangement is especially suitable for a glass bottle with a rolled rim.

The invention can be easily applied to hinged caps which are widely used in automated analyzers.

Therefore, according to a specific embodiment of the invention, the reagent container cap comprises a cap body and a lid hinged thereto so as to be pivotable around a pivot axis between a closed position and an opened position in order to adjust the cap between the closed state and the opened state, the cap body comprising a body main portion and a body insert portion, the lid comprising a lid main portion and a lid insert portion, wherein the main portion of the reagent container cap comprises or consists of the body main portion and the lid main portion and wherein the insert portion of the reagent container cap comprises or consists of the body insert portion and the lid insert portion.

The body main portion and the lid main portion can be formed in one piece by the same main portion material such as polypropylene and can be connected to each other by an integrally formed film hinge.

The body insert portion can comprise a neck portion defining the cap opening and the lid insert portion can comprise a plug portion to be inserted into the neck portion when pivoting the lid to the closed position in order to tightly seal the reagent container on which the cap is mounted.

The invention can also be applied to a pierce cap which is another widely used type of reagent container cap.

Therefore, according to another specific embodiment of the invention the insert portion of the reagent container cap has a closure part adapted to be perforated and/or opened by a needle of a pipetting device of an analytical apparatus in order to adjust the cap to the opened state, said closure part furthermore being adapted to automatically adjust the cap to the closed state after the needle is removed.

Conventional analyzers often use reagent kits comprising a support structure supporting a single reagent container or a given number of reagent containers that are needed for a specific test. Therefore, the reagent container cap, in the case of hinged caps preferably the cap body, can furthermore be adapted to be mounted to a support structure, preferably by snap-fit, the support structure being adapted to accommodate at least one reagent container.

The applicant also intends to protect a reagent container unit comprising a reagent container having a top-side opening and an associated reagent container cap according to the invention as described above, the reagent container cap being mounted or mountable to the reagent container.

In particular when intended for aggressive solvents, the reagent container can be made from glass but of course also plastic materials or other materials are possible.

Furthermore, protection is claimed for a reagent kit comprising a support structure and either a single reagent container unit or a plurality of reagent container units accommodated on the support structure, each reagent container unit comprising a reagent container and an associated reagent container cap mounted or mountable thereto, wherein the single reagent container or at least one of the plurality of reagent container units, according to some embodiments each reagent container unit, is a reagent container unit according to the invention as described above.

In many cases, for ease of handling, a given number of reagent container units necessary for performing a specific test, e.g. three reagent container units, are accommodated on a common support structure.

According to a specific embodiment of the invention, the reagent container cap of the single reagent container unit or of at least one of the plurality of reagent container units is adapted to being fitted, e.g. snap-fitted or press-fitted, to the support structure from above, the reagent kit comprising a key and slot joint between the aforementioned reagent container cap and the support structure.

The key and slot joint comprises a key part provided on one element of the support structure and the reagent container cap and a slot part provided on the other element of the support structure and the reagent container cap, the key part protruding vertically from an adjacent region of the one element and the slot part having two vertical surface portions facing each other and adapted to receive the key part therebetween when the reagent container cap is fitted to the support structure from above.

In this manner, the key and slot joint is adapted to reduce a rotational movement of the respective reagent container cap relative to the support structure around a vertical axis so that undesired rotational movements due to manufacturing tolerances can be minimized or avoided.

Alternatively or additionally, the reagent container cap of the single reagent container unit or of at least one of the plurality of reagent container units can be adapted to being mounted, in particular snap-fitted, to the support structure from above, wherein one element of this reagent container cap and the support structure comprises a deformation protrusion arrangement and the other element comprises a deformation zone associated to the deformation protrusion arrangement, wherein the associated deformation zone is adapted to being deformed by the deformation protrusion arrangement when the reagent container cap is mounted to the support structure. Thus, the deformation protrusion arrangement and the deformation zone provide a localized and defined deformation in order to accommodate manufacturing tolerances in the vertical direction.

The height of the protrusions of the protrusion arrangement is usually smaller than 1 mm, preferably smaller than 0.5 mm and can range e.g. from 0.05 mm to 1 mm. Their dimension in a lateral direction or their diameter can range from 0.1 mm to 1.0 mm. The deformation zone can be a horizontal ledge having a thickness (dimension in a vertical direction) ranging from 0.2 mm to 2.0 mm.

According to a specific embodiment that can be used in many tests, the reagent kit comprises three reagent container units arranged in a row along a connection line, wherein one of the reagent container units, preferably the foremost reagent container unit, comprises a reagent container cap according to the invention as described above, i.e. having a main portion and an insert portion made from different materials and preferably a reagent container made from glass, the two other reagent container units comprising reagent containers caps made from a single plastic material and reagent containers also made from a plastic material.

Hereafter, the present invention will be described with respect to several embodiments shown in the following figures.
- Fig. 1: shows a first embodiment of a reagent container cap according to the invention with the lid in the fully opened position in different views in insets a), b) and c), inset a) being a bottom view, inset b) being a perspective view and inset c) being a top view.
- Fig. 2: shows the subject-matter of Fig. 1 but with the insert portions of the cap body and of the lid removed.
- Fig. 3: shows perspective views of the isolated insert portions of the cap body and of the lid in insets a) and b) respectively.
- Fig. 4: shows the subject-matter of Fig. 3 in perspective sectional views taken along an axial plane.
- Fig. 5: shows the subject matter of inset b) of Fig. 1 in a partial sectional view.
- Fig. 6: is a cross-sectional view of the reagent container cap of Fig. 1 taken along an axial plane orthogonal to the hinge of the lid with the lid in the fully closed position.
- Fig. 7: shows different views of the reagent container cap of Fig. 1 in insets a) to e), inset a) being a side elevational view, inset b) being a back view, inset c) being a bottom view, inset d) being a front view and inset d) being a top view.
- Fig. 8: shows a first embodiment of a reagent kit according to the invention in a perspective view.
- Fig. 9: shows a cross-sectional view of the subject-matter of claim 8, taken along a vertical, longitudinal central plane of the reagent kit.
- Fig. 10: shows an enlarged view of the region X in Fig. 9.
- Fig. 11: shows an enlarged cross-sectional view, taken along the sectional plane XI-XI in Fig. 8 of a part of only the support structure of the reagent kit of Fig. 8.
- Fig. 12: shows a perspective view of one of the two rear reagent container caps of the reagent kit of Fig. 8.
- Fig. 13: shows a perspective view of a plastic reagent container used in the reagent kit in Fig. 8.
- Fig. 14: shows a perspective view of a glass reagent container used in the reagent kit in Fig. 8.
- Fig. 15: shows a cross-sectional view of a second exemplary embodiment of a reagent container cap according to the invention in the form of a hinged cap that is to be threaded to the reagent container.
- Fig. 16: shows a cross-sectional view of a third exemplary embodiment of a reagent container cap according to the invention in the form of a pierce cap.
- Fig. 17: shows only the main portions of the cap body and the lid for a reagent container cap that is slightly modified with respect to the first embodiment in a view corresponding to that of inset c) of Fig. 2.

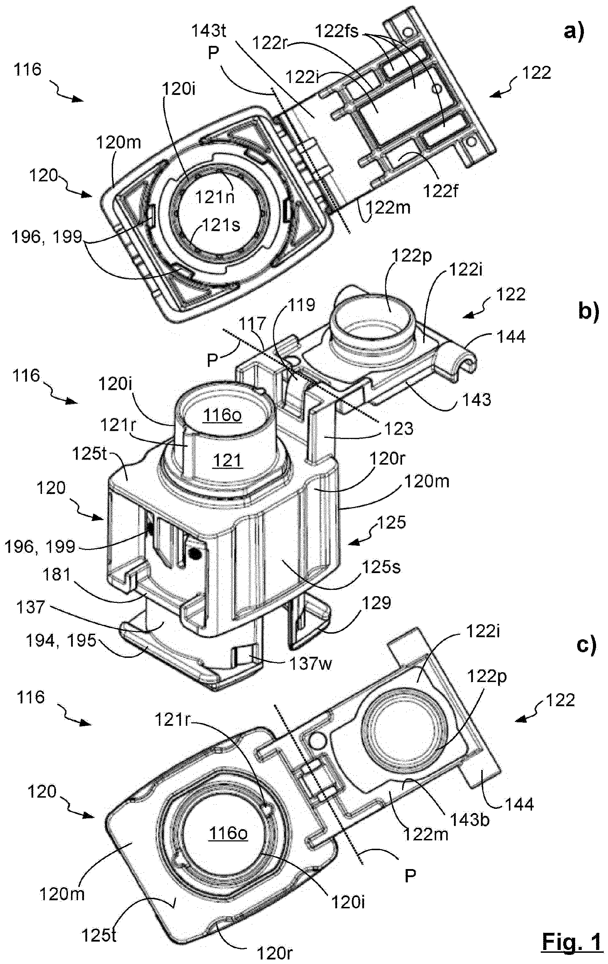

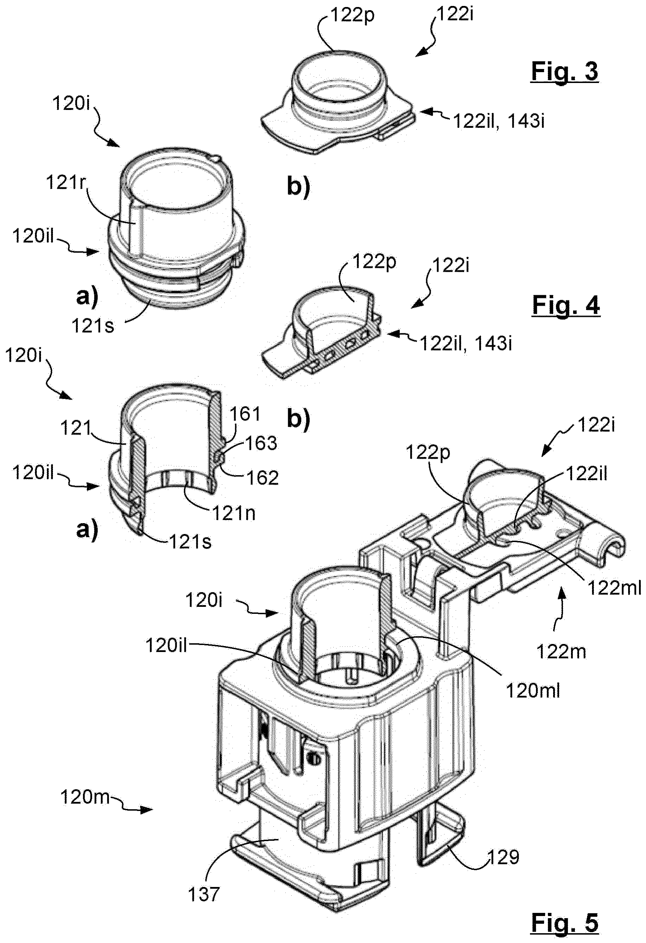

In the following, a first exemplary embodiment of a reagent container cap according to the invention is described with reference to Figs. 1 to 7.

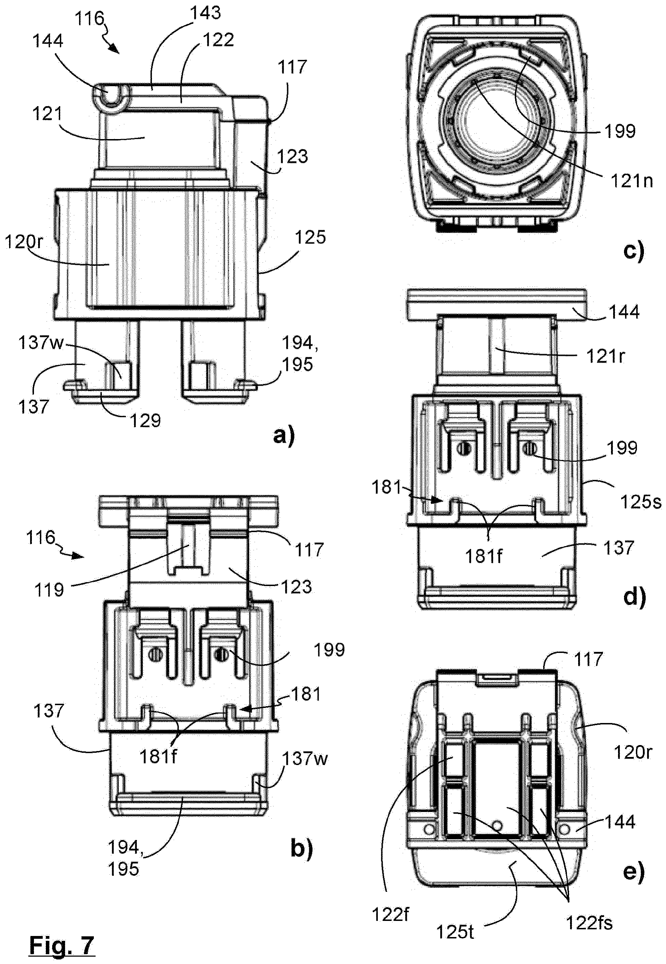

In this embodiment, the reagent container cap 116 (in short "cap") is a hinged cap and comprises a cap body 120 and a lid 122 hinged to the cap body 120 so as to be pivotable between a fully opened position as shown in Fig. 1 and a fully closed position as shown in Fig. 7 in order to adjust the cap 116 between an opened and a closed state..

The outward appearance of the cap body 120 and the lid 122 will be described mainly with reference to Fig. 1.

In an upper region, the cap body 120 comprises an essentially cylindrical neck portion 121 defining a circular cap opening 116o and a hinge support structure 123 supporting a film hinge 117 integrally formed with the cap body 120 and the lid 122.

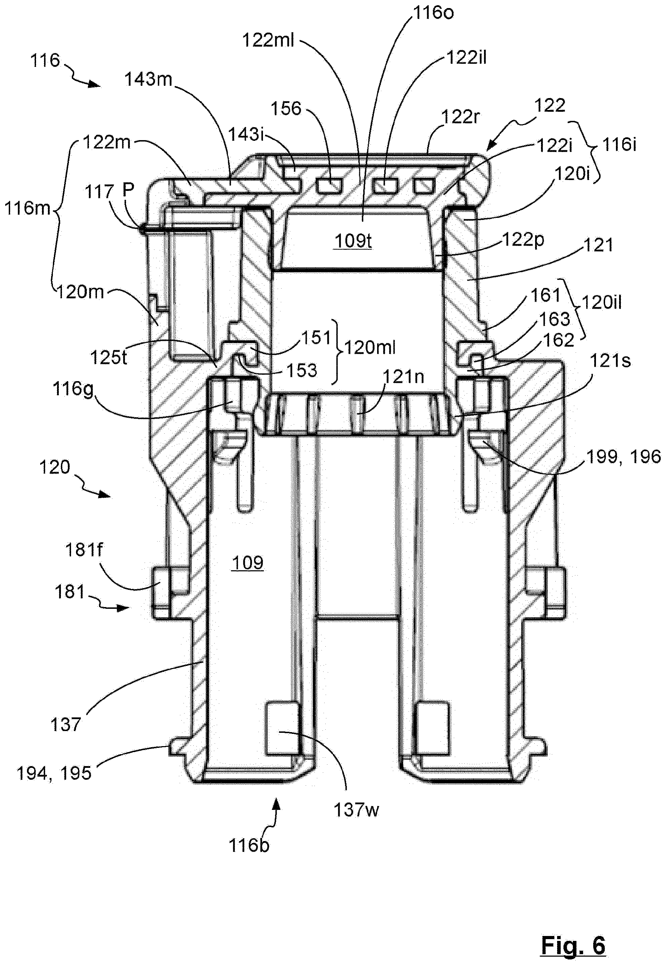

The cylindrical neck portion 121 extends downward into a cap interior space 109 (cf. Fig. 6) and is integrally formed with a sealing ring 121s disposed at the lower end of the neck portion 121 visible in the bottom view of inset a). An optional arrangement of notches 121 n can be provided on an inner surface of the sealing ring 121s.

Two vertical ribs 121r can be provided on opposite positions on the outer peripheral surface of the neck portion 121, one of the ribs 121 being a remnant of the feeding channel of the mold in which the neck portion 121 is formed as a part of the insert portion 120i of the cap body 120, the other rib 121r being a remnant of a test channel used for measuring the pressure in the aforementioned mold during injection molding (cf. Fig. 1b)).

In a middle region, the cap body 120 comprises a frame structure 125 with a horizontal top wall 125t and two essentially vertical side walls 125s providing stability to the cap. Furthermore, the frame structure 125 can be used to cooperate with a suitable positioning and/or retaining device of an analyzer.

In particular, recessed portions 120r of the cap body 120 provided on the side walls 125s of the frame structure can be used to cooperate with such a positioning device, while the top wall can 125t can be used to cooperate with a retaining device preventing the reagent container cap or the reagent container unit or reagent kit attached thereto to move upwards when the lid is opened.

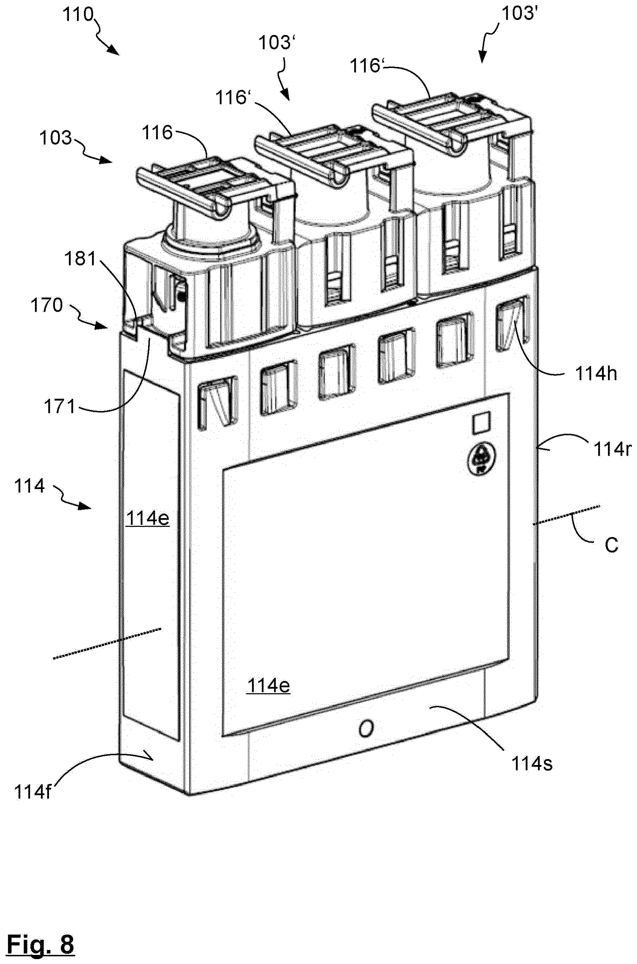

In a lower end region of the frame structure 125 on the front and rear side of the cap 116, the slot part 181 of a key and slot joint between the reagent container cap 116 and a support structure is provided on which will be described in more detail later on with regard to the reagent kit illustrated in Figs. 8 to 14.

An essentially cylindrical container receiving structure 137 is partially disposed within the frame structure 125 but protrudes downwards therefrom. In an upper region of the container receiving structure 137, an arrangement of snap hooks 199 is provided as an attachment structure 196 for holding the upper rim 118r of a reagent container 118. Furthermore, in order to attach the reagent container cap 120 to a support structure of a reagent kit, a mounting plate 129 is provided at the lower end of the container receiving structure 137 and snap windows 137w are arranged in the container receiving structure 137 near the mounting plate 129.

A deformation zone 194 in the form of a horizontal ledge 195 is provided on the front side and the back side of the mounting plate 129. The function of this deformation zone 194 will be explained in more detail later on with respect to the reagent kit illustrated in Fig. 8 to 14.

The lid 122 comprises a plate portion 143 with a top side 143t and a bottom side 143b. Here, it is noted that indications of direction and orientation relate to the reagent container cap 120 under normal operating directions while being closed so that e.g. the bottom view of the reagent cap 120 as shown in inset a) of Fig. 1 shows the top side 143t of the plate portion 143 of the lid 122 in the fully opened position while the top view as shown in inset c) of Fig. 1 shows the bottom side 143b of the plate portion 143.

The lid 122 furthermore comprises a plug portion 122p vertically extending from a bottom side 143b of the plate portion 143, wherein the plug portion 122p is adapted to be inserted into the neck portion 121 of the cap body 120 when closing the lid 122.

Several ribs 122r extending either parallel or orthogonal to the pivot axis Pare provided on the top side 143t of the plate portion 143 and define an arrangement of several rectangular fields 122f.

An over center spring 119 or pulling band ("Zugband" in German) connecting the lid 122 and the cap body 120 serves to bias the cap lid 122 as well to the completely or nearly closed positions shown in Fig. 7 as the fully opened position of Fig. 1, depending on the initial position of the lid 122.

Finally, the lid 122 comprises two bar-shaped engagement protrusions 144 protruding horizontally from the plate portion 143 on both sides and adapted to cooperate with an external device for opening/closing the reagent containers.

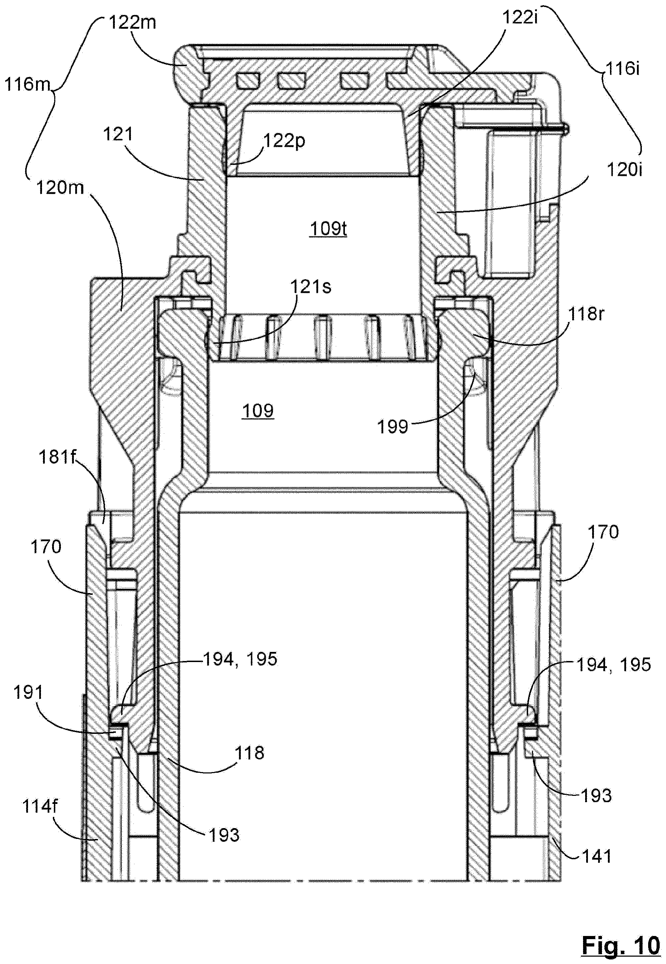

Material-wise, as shown in the cross-sectional views of Fig. 6 and Fig. 10, the cap 116 comprises or is configured from a main portion 116m and an insert portion 116i that are made from different materials but are permanently connected to each other so that the cap 116 forms an integral unit.

To be more precise, in the present embodiment, both the cap body 120 and the lid 122 comprise or are configured from a main portion 120m, 122m and an insert portion 120i, 122i that are made from different materials and are fixedly connected to each other.

The body insert portion 120i and the lid insert portion 122i are arranged in such a manner that, when the lid 120 is in the closed position, i.e. the cap 116 is in the closed state, an upper end region 109t of the cap interior space 109 is delimited exclusively by surfaces of the insert portion 116i of the cap, i.e. by surfaces of the body insert portion 120i and of the lid insert portion 122i. In other words, when the cap 116 is in the closed state, the cap interior space comprises a region 109t which is delimited circumferentially and towards the upper side thereof exclusively and completely by surfaces of the insert portion 116i.

Therefore, when the cap 116 is mounted on a reagent container 118 and the lid 122 is closed, such as shown in Fig. 10, only the insert portion 116i of the reagent container cap 116 is in fluid contact with an interior 118i of the container 118.

Accordingly, the insert portion is preferably made from a material such as a thermoplastic olefin or a low-density polyethylene which is resistant also to more aggressive solvents and due to its high elasticity has good sealing properties while the main portion can be made from a more cost-effective and mechanically strong material such as polypropylene.

In the present exemplary embodiment, the insert portion 120i of the cap body 120 comprises the cylindrical neck portion 121 with the integrated sealing ring 121s while the main portion 120m of the cap body 120 comprises the hinge support structure 123, the frame structure 125 and the container receiving structure 137 with the mounting plate 129.

The main portion 122m of the lid 122 comprises a main portion part 143m of the plate portion 143, the ribs 122r and the engagement protrusions 144 while the insert portion 122i of the lid comprises 122 the plug portion 122p and an insert portion part 143i of the plate portion 143. The film hinge 117 and the over center spring 119 can be associated to the main portion of the cap body 120 and/or of the lid 122 as those are manufactured in one piece.

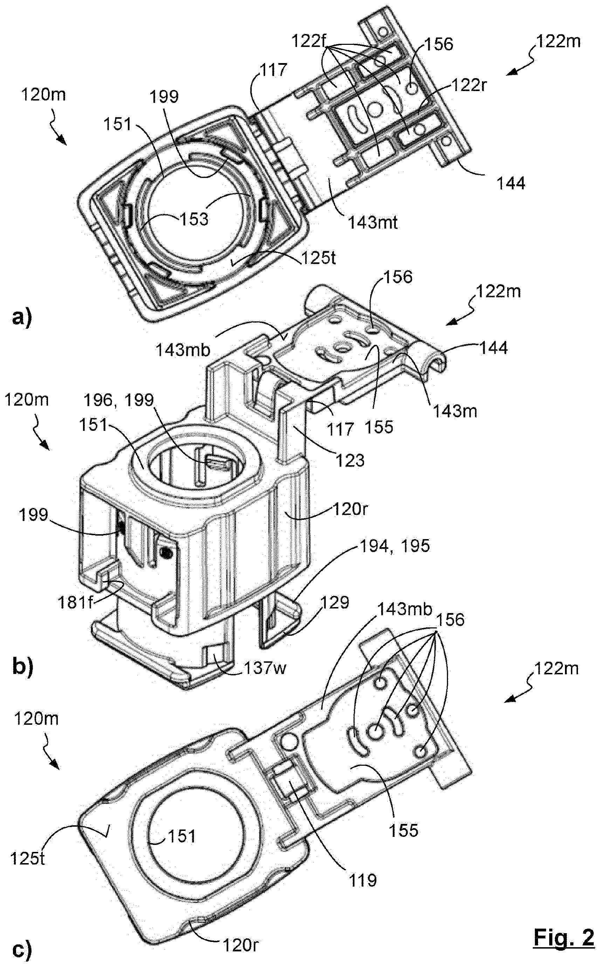

Figs. 2 to 6 illustrate how the body main portion 120m and the body insert portion 120i on the one hand and the lid main portion 122m and the lid insert portion 122i on the other hand can be fixedly connected to each other.

The reagent container cap 116 is manufactured in a multi material injection molding process in which the main portions 120m, 122m of both cap body 120 and lid 122 are formed first in one piece from a main portion material such as PP, and then the insert portions 120i, 122i of both cap body 120 and lid 122 are formed from an insert portion material such as TPO or LDPE in a mold that is formed partially by surfaces of the main portions 120m, 122m and partially by separate mold surfaces (not illustrated).

In this manner, interlocking structures 120ml, 120il, 122ml, 122il (cf. Fig. 6) can be provided on both the main and the insert portion 120m, 120i, 122m, 122l of the cap body 120 and of the lid 122, the interlocking structures 120il and 120ml as well as the interlocking structures 122il, 122ml engaging with each other in order to fixedly attach the insert portions 120i, 122i to the respective main portions 120m, 122m, even if those portions are made from different materials that do not bond well.

In more detail, in the present embodiment, the interlocking structure 120ml provided on the body main portion 120m comprises an inner rim 151 provided on the horizontal top wall 125t of the frame structure 125. Two opposing grooves 153 in the form of ring segments are provided in the bottom side of the top wall 125t of the frame structure 125 adjacent this inner rim 151 (cf. Figs 2 and 6).

Correspondingly, the interlocking structure 120il provided on the body insert portion 120i comprises an annular upper flange 161 and two opposing lower flanges 162 in the form of ring segments sandwiching the inner rim 151, the lower flanges 162 having axial protrusion 163 at their distal ends which protrude upwards into the annular grooves 153 resulting in a fixed positive connection between the body main portion 120m and the body insert portion 120i

The interlocking structure 122ml provided on the lid main portion 122m comprises a shallow depression 155 in the bottom side 143mb of the main portion part 143m of the plate portion 143 and an arrangement of several through holes 156 connecting the bottom side 143mb and the top side 143mt of the main portion part 143m of the plate portion 143 as can best be seen in Fig. 2.

The corresponding interlocking structure 122il of the lid insert portion 122i(cf. Fig. 6) fills the depression 153, the through holes 156 and selected fields 122fs of the fields 122f on the top side of the lid 122 and basically constitutes the insert portion part 143i of the plate portion 143 of the lid 122.

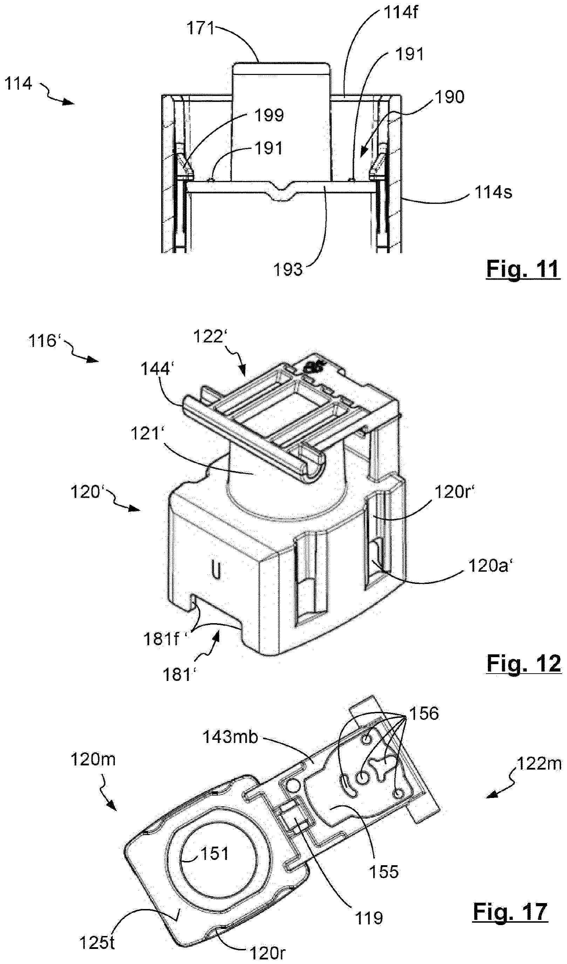

A slightly modified arrangement of through holes 156 in the main portion part 143m of the plate portion 143 of the lid 122 is shown in Fig. 17. This modified arrangement of through holes 156 results in a modified arrangement of interlocking structures provided on the lid insert portion and the lid main portion (not illustrated).

Furthermore, as shown in the cross-sectional views in Figs. 6 and 10, the reagent container cap 116 comprises an annular gap 116g between the sealing ring 121s formed at the lower end of the cylindrical neck portion 121 and the main portion 120m of the cap body 120, the annular gap 116g being adapted to receive an upper end 118t or rim 118r of a reagent container 118.

In the following, a reagent container unit 103 and a reagent kit 110 according to a first exemplary embodiment of the invention is described with reference to Figs. 8 to 14.

The reagent container unit 103 comprises a reagent container cap 116 as described before with reference to Figs. 1 to 7 and a reagent container 118 in the form of a conventional glass vial comprising a circular opening 118o and a cylindrical peripheral wall 118w.

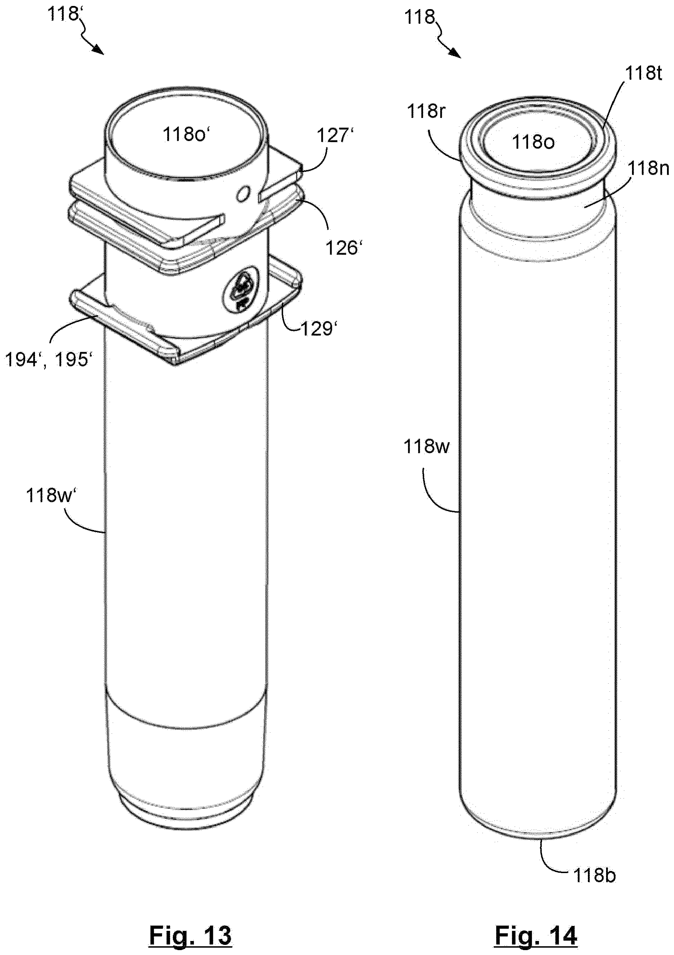

As shown in Fig. 14, the reagent container can comprise a bottom wall 118b which is e.g. curved slightly upwards, a neck portion 118n with a reduced diameter and an upper rim 118r provided at the upper end.

In order to assemble the reagent container unit 103, the reagent container 118 is inserted from below in the cylindrical container receiving structure 137 and therefore in the cap interior space 109 until the upper rim 118r has passed the snap hooks 199 and is retained by the snap hooks 199 in the peripheral gap 116g between the the sealing ring 121s and the main portion 120m of the cap body 120.

The reagent container receiving structure 137 and the reagent container 118 in form of a conventional glass vial are assembled (snap-fitted) together with a minimum force of 25 N and a maximum force of 75 N to pass the snap hooks 199 to a reagent container unit 103. Preferably, the reagent container receiving structure 137 and the reagent container 118 in form of a conventional glass vial are assembled (snap-fitted) together with a force of 40 N to 60 N to pass the snap hooks 199.

In order to accommodate deformations occurring in the sealing ring 121 when it is inserted into the opening 118o of the reagent container 118 without compromising its sealing properties (by avoiding a wrinkling of a sealing surface thereof), an arrangement of regularly spaced longitudinal notches 121n can optionally be provided on the inner side of the sealing ring 121. However depending on the material chosen for the body insert portion 120i, these notches can also be omitted.

The reagent kit 110 as shown in Fig. 8 comprises three reagent container units 103, 103' arranged in a row along a connection line C so that the pivot axes P of their lids are orthogonal to the connecting line C and all reagent container units 103 are provided on a common support structure 114.

Only the frontmost reagent container unit 103 comprises a reagent container cap 116 according to the invention and is therefore a reagent container unit 103 according to an embodiment of the invention whereas the two other reagent container units 103' have conventional reagent container caps 116' made from a single plastic material.

It is noted that the features of the reagent container units 103' corresponding to those of the reagent container units 103 are denoted with the same reference signs to which an apostrophe is appended, and that the reagent container units 103' are described mainly only insofar as they are different from the reagent container unit 103.

The common support structure 114 is roughly box-shaped and comprises a front wall 114f, a rear wall 114r and two side walls 114s. As the reagent container units 103, 103' are inserted from above into the support structure 114, the support structure 114 can comprise a bottom wall or can be open at the bottom side.

Portions 114e on which e.g. a label for marking the content of the reagent kit unit 110 can be disposed can be provided on any of the aforementioned walls of the common support structure 114.

According to an embodiment, a label or a RFID chip/antenna or a combination of a label and a RFID chip/antenna (Combi-Label) for marking the content of the reagent kit unit 110 can be disposed on the front wall 114f or rear wall 114r of the common support structure 114.

The label for marking the content can be a human readable label or a bar code label or a combination of a human readable label and a bar code label.

According to a preferred embodiment, a label and a RFID chip/antenna (Combi-Label) can be disposed on the front wall 114f and a label can be disposed on the rear wall 114r of the of the common support structure 114.

The Combi-Label is consisting of a label having the dimension of 65 mm (+/- 0.2 mm) to 16 mm (+/- 0.2 mm) covering the RFID chip and antenna which has a dimension of 14.5 mm to 14.5 mm and a thickness of 0.3 to 0.4 mm.

The two side walls 114s of the common support structure 114 have recessed portions 114e on which optionally a label for marking the content of the reagent kit unit 110 can be placed. Said recess portions 114e on the side walls 114s have a flat surface.

In an upper region of the side walls 114s, an arrangement of snap hooks 114h is provided for engaging with the mounting plate 129 and the snap windows 137w of the reagent container cap 116 of the frontmost reagent container unit 103 and with the mounting plates 129' provided on the reagent containers 118' of the other reagent container units 103'.

The three reagent container units 103, 103' are assembled (snap-fitted) in the common support structure 114 with a minimum force of 50 N and a maximum force of 135 N to pass the snap hooks 114h. Preferably the three reagent container units 103, 103' are assembled (snap-fitted) in the common support structure 114 with a force of 70 N to 125 N to pass the snap hooks 114h (Fig. 8).

The three positions of the common support structure 114: rear position (towards 114r), middle position and front position (towards 114f) can be assembled with any combination of the reagent container units 103, 103'. Fig. 8 shows a combination example.

The orientation of the reagent container units 103, 103' assembled in the common support structure 114 are oriented with the two bar-shaped engagement protrusions 144 protruding horizontally from the plate portion 143 on both sides of the lid 122 towards the front side 114f.

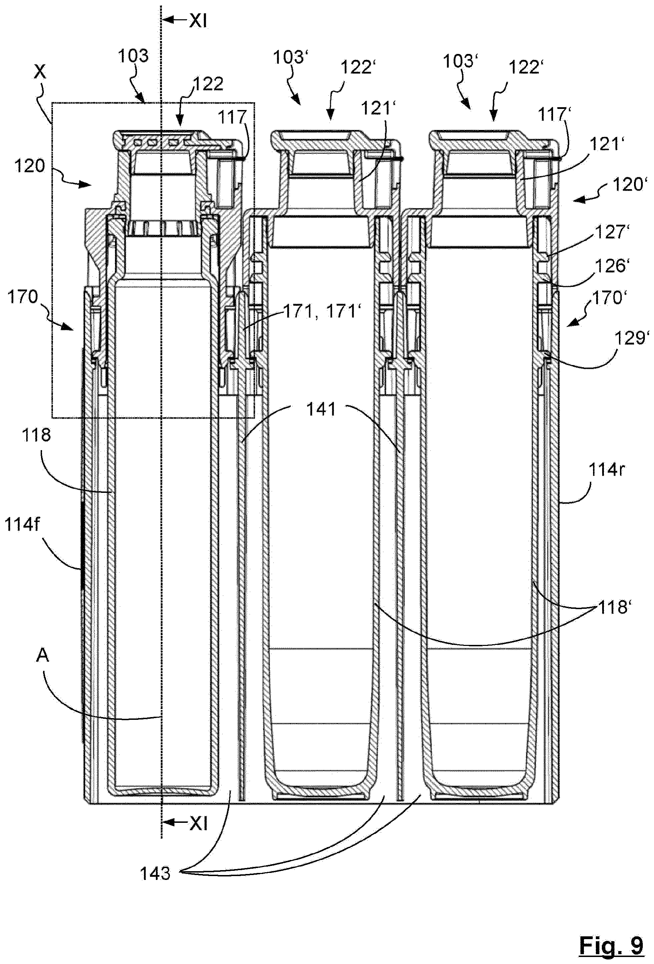

As shown in the cross-sectional view of Fig. 9, the reagent container support structure 114 may be partitioned by partitioning walls 141 in three compartments 143, each adapted to accommodate a single reagent container unit 103 or 103'.

Furthermore, the reagent kit 110 comprises several particular structures adapted to accommodate several types of manufacturing tolerances between the support structure 114 and the reagent container caps 116, 116'.

In particular, the reagent kit 110 can comprise several key and slot joints 170, 170' between the support structure 114 and the reagent container caps 116, 116'.

As shown in Fig. 8 and e.g. inset d) of Fig. 7, the key and slot joint 170 comprises a rectangular key part 171 provided on the front wall 114f of the support structure 114 and a slot part 181 provided on a front side of the reagent container cap 116, the key part 171 protruding vertically from an adjacent region of the front wall 114f and the slot part 181 having two vertical surface portions 181f facing each other and adapted to receive the key part 171 therebetween when the reagent container cap 116 is snap-fitted to the support structure 114 with the rest of the reagent container unit 103 from above.

Another similar or structurally identical slot part 181 is provided on the back side of the reagent container cap 116 as is evident from a comparison of insets b) and d) of Fig. 7, this slot part cooperating 181 cooperating with a corresponding key part 171 provided on the corresponding internal dividing wall 141 of the support structure 114. It is noted those key parts 171, 171' provided on the partitioning walls 141 cooperate with the slot parts 181, 181' of both reagent container caps 116, 116' mounted next thereto.

The resulting key and slot joints 170 reduce a rotational movement of the reagent container caps 116 around a vertical central axis A of the respective cap opening 116o (cf. Fig. 9)

Corresponding key and slot joints 170' are also provided between the support structure 114 and the reagent container caps 116' of the reagent container units 103'.

The rotational movement of each of the reagent container caps 116, 116' with respect to the support structure 114 around a vertical central axis A can be from +/-0.5° to +/- 3°.

The rotational movement of each of the reagent container caps 116, 116' with respect to the support structure 114 around a vertical central axis A is preferably not larger than +/- 1°.

The support structure furthermore comprises several deformation protrusion arrangements 190, each deformation protrusion arrangement 190 comprising several (here two) small vertical protrusions 191 protruding e.g. from a respective horizontal support rib 193 that can be provided on the inner side of the front wall 114f, on the inner side of the back wall 114r and on both sides of the partitioning walls 141 (cf. Fig. 10). In the present embodiment, the height of the protrusions 191 is about 0.3 mm and their lateral dimension (in the horizontal direction in Fig. 11) is about 0.6 mm.

The reagent container caps 116, 116' have associated deformation zones 194 in the form of horizontal ledges 195. Position and size of the deformation protrusion arrangement and of the associated deformation zone is chosen in such a manner that the associated deformation zone 194 is deformed by the protrusions of the deformation protrusion arrangement when the reagent container cap 116 is snap-fitted to the support structure 114. In this manner, vertical manufacturing tolerances can be accommodated. In the present embodiment, the thickness (vertical dimension) of the deformation zone 194 is about 1 mm and in the cross-sectional plane of Fig. 10 it protrudes by about 0.95 mm from the container receiving structure 137.

With respect to the reagent container units 103', it is noted, that their reagent container caps 116' mainly differ from those reagent container caps 116 according to the invention in that they are manufactured from a single material and in that they are not adapted to being directly mounted to the support structure 114 which is instead directly snap-fitted to a lower mounting plate 129' provided on the peripheral wall 118w' of the corresponding reagent container 118'.

Furthermore, also the manner in which the reagent container cap 116' is fitted to the reagent container 118' can be slightly different. In particular, as shown in Fig. 12, the cap body 120' comprises snap windows 120a' provided in the recessed portions 120r' for engaging with a middle mounting plate 126' provided on the reagent container 118' above the lower mounting plate 129'.

The reagent container caps 116' and the reagent container 118' in form of a polypropylene container are assembled (snap-fitted) together with a minimum force of 80 N and a maximum force of 150 N by the concerted action of windows 120a' provided in the recessed portions 120r' for engaging with a middle mounting plate 126' provided on the reagent container 118'. Preferably, the reagent container caps 116' and the reagent container 118' in form of a polypropylene container are assembled (snap-fitted) together with a force of 90 N to 130 N by the concerted action of windows 120a' provided in the recessed portions 120r' for engaging with a middle mounting plate 126' provided on the reagent container 118'.

The reagent container 118' as shown in Fig. 13 is formed in one piece from a suitable material such as PP and comprises, in addition to the lower mounting plate 129' and the middle mounting plate 126' also an upper mounting plate 127'

The upper mounting plate 127' can be adapted to abut against a stop element of the cap 116 (not shown), thus ensuring that the cap 116' is not displaced further downward than shown in Fig. 9.

Fig. 9 shows that the diameters of the neck parts 121' of the reagent container caps 116' of the two reagent container units on the rear, although otherwise very similar, can be different, depending on the future content of the respective container units. Some containers may be filled with substances comprising e.g. beads or other sediments which have to be regularly mixed within the respective reagent container 118' by a suitable mixing device. As the diameter of such mixing device is usually larger than the diameter of a pipetting device, the cap opening of a reagent container which contains a substance that has to be mixed can be larger than that of the other reagent containers.

It is noted that the support structure 114, the reagent containers 118' and the reagent container caps 116' are very similar to those illustrated and described in WO 2011/020885 A1, with the exception of the key and slot junctions 170', the deformation protrusion arrangements 190' and the deformation zones 194' as described above.

In the first exemplary embodiments of a reagent container cap, a reagent container unit and a reagent container kit according to the invention as illustrated in Figs. 1 to 14, the reagent container caps 116, 116' are hinged caps which are snap-fitted to the associated reagent containers 118, 118'.

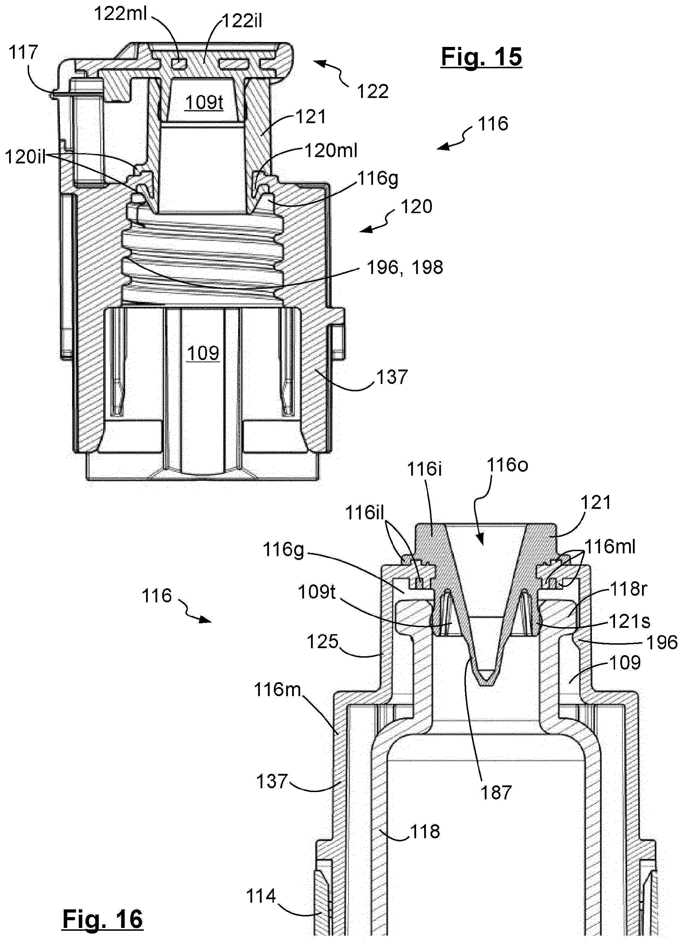

However, there are other possibilities as illustrated in an exemplary manner in Figs. 15 and 16 showing a second and a third exemplary embodiment of a reagent container cap according to the invention which can be used instead of the reagent container caps according the first exemplary embodiment described before in a reagent container unit or a reagent container kit according to the invention.

It is noted that features of the second and third exemplary embodiment which are identical or correspond to those of the first exemplary embodiment are denoted by that same reference signs as for the first embodiment and that the second and third embodiment will be mainly described only insofar as they differ from the first embodiment. Otherwise, reference is made to the above description of the first embodiment.

The hinged reagent container cap 116 of the second exemplary embodiment as shown in Fig. 15 mainly differs from the first embodiment in that the cap body 120 is adapted to be screwed instead of snap-fitted to a suitable reagent container (not shown) and therefore comprises an inner thread 198 formed in the body main portion 120m as an attachment structure 196. Furthermore, it is noted that also the interlocking structures 120ml, 120il, 122l, 122il slightly differ from those of the first embodiment.

Fig. 16 illustrated a reagent container cap 116 of a third exemplary embodiment of the invention in the form of a pierce cap. Instead of a hinged lid, this cap 116 comprises a funnel-shaped closure part 187 adapted to be perforated and/or opened by a needle of a pipetting device of an analytical apparatus (not shown) in order to adjust the cap to the opened state, said closure part 187 furthermore being adapted to automatically adjust the cap to the closed state after the needle is removed.

With respect to the initial perforation and the opening and closing of such a cap, reference is made to Figs. 6 to 10 and the corresponding description in prior art document EP 0564970 A2.

In the embodiment of Fig. 16, the insert portion 116i of the reagent container cap 116 is formed in one piece from an insert portion material such as TPO or LDPE and comprises a comparatively short neck portion 121 defining the cap opening 166, a sealing ring 121s to be inserted into the container 118 and the aforementioned closure part 187.

The main portion 116m of the reagent container cap 116 mainly comprises a container receiving structure 137 and a frame structure 125 supporting the insert portion 116i and adapted to surround the neck portion 118n of the container 118.

In contrast to the first two embodiments, in the pierce cap of Fig. 16, the region 109t of the cap interior space 109 which is delimited circumferentially and towards the upper side of this region completely and exclusively by surfaces of the inset portion 116i is not the complete cylindrical upper end region of the cap interior space 109 but the annular space delimited between the closure part 187 and the sealing ring 121s.

In all embodiments however, the position and arrangement of the main portion 116m and the inset portion 116i of the reagent container cap 116 is chosen in such a manner that when the cap 116 is in the closed state and mounted to a reagent container 118, the interior of the reagent container 118 is in communication only with the insert portion of the reagent container cap 116.

## Claims

1. Reagent container cap (116) adapted to being mounted to a reagent container (118),
and to being adjustable, at least after an initial opening of the cap (116), between an opened state and a closed state,
wherein the reagent container cap (116) defines a cap interior space (109) and has a cap opening (116o) allowing access to the cap interior space (109) from above when the cap (116) is in the opened state and under normal operating conditions in which the cap (116) is vertically oriented so that the cap opening faces (116) upwards; and wherein, in the closed state of the cap (116) under normal operating conditions, the cap interior space (109) is open only towards a bottom side (116b),
wherein the reagent container cap (116) comprises a main portion (116m) and an insert portion (116i) that are permanently connected to each other and made from different materials, wherein, when the cap (116) is in the closed state, the cap interior space (109) comprises a region (109t) which is delimited circumferentially and towards the upper side of this region under normal operating conditions completely and exclusively by surfaces of the insert portion (116i),
wherein the cap (116) comprises an annular gap (116g) formed between the insert portion (116i) and the main portion (116m), the annular gap (116g) being adapted to accommodate an upper end (118t) of the reagent container (118).

2. Reagent container cap (116) according to claim 1,
wherein the main portion (116m) comprises a main portion material and the insert portion (116i) comprises an insert portion material which is more flexible than the main portion material.

3. Reagent container cap (116) according to claim 2,
wherein the main portion material is polypropylene and the insert portion material is a thermoplastic olefin or a low-density polyethylene.

4. Reagent container cap (116) according to any of the preceding claims, wherein the main portion and the insert portion have interlocking structures (116ml, 116il, 120ml, 120il, 122ml, 122il) adapted to engage with each other in order to fixedly connect the main portion (116m) and the insert portion (116i).

5. Reagent container cap (116) according to any of the preceding claims wherein the main portion (116m) has an attachment structure (196), in particular a snap structure (199) or a thread structure (198), which is adapted to attach the reagent container cap (116) to a reagent container (118) from the outside.

6. Reagent container cap (116) according to any of the preceding claims, comprising a cap body (120) and a lid (122) hinged thereto so as to be pivotable around a pivot axis (P) between a closed position and an opened position in order to adjust the cap (116) between the closed state and the opened state,
the cap body (120) comprising a body main portion (120m) and a body insert portion (120i) fixedly connected to each other, the lid (122) comprising a lid main portion (122m) and a lid insert portion (122i) fixedly connected to each other, wherein the main portion (116m) of the reagent container cap (116) comprises the body main portion (120m) and the lid main portion (122m) and wherein the insert portion (116i) of the reagent container cap (116) comprises the body insert portion (120i) and the lid insert portion (122i).

7. Reagent container cap according to claim 6, wherein the body insert portion (120i) comprises a neck portion (121) defining the cap opening (116o) and the lid insert portion (122i) comprises a plug portion (122p) to be inserted into the neck portion (121) when pivoting the lid (122) to the closed position.

8. Reagent container cap (116) according to any one of claims 1 to 5, wherein the insert portion (116i) has a closure part (187) adapted to be perforated and/or opened by a needle of a pipetting device of an analytical apparatus in order to adjust the cap (116) to the opened state, said closure part (187) furthermore being adapted to automatically adjust the cap (116) to the closed state after the needle is removed.

9. Reagent container cap (116) according to any of the preceding claims, wherein the reagent container cap (116) is furthermore adapted to be mounted to a support structure (114), the support structure (114) being adapted to accommodate at least one reagent container (118, 118').

10. Reagent container unit (103), comprising:
a reagent container (118) having a top-side opening (118o),
a reagent container cap (116) according to any of the preceding claims, the reagent container cap (116) being mounted or mountable to the reagent container (118).

11. Reagent container unit (103) according to claim 10,
wherein the reagent container (118) is made from glass.

12. Reagent kit (110) comprising:
- a support structure (114),
- a single reagent container unit or a plurality of reagent container units (103, 103') accommodated on the support structure (114), each reagent container unit (103, 103) comprising a reagent container (118, 118') and a reagent container cap (116, 116) mounted or mountable thereto, wherein the single reagent container unit or at least one of the plurality of reagent container units (103, 103') is a reagent container unit (103) with the features of claim 10 or 11.

13. Reagent kit (110) according to claim 12,
wherein the reagent container cap (116, 116') of the single reagent container unit or of at least one of the plurality of reagent container units (103, 103') is adapted to being fitted to the support structure (114) from above, the reagent kit (110) comprising a key and slot joint (170, 170') between this reagent container cap (116, 116') and the support structure (114),
the key and slot joint (170, 170') comprising a key part (171) provided on one element (114) of the reagent container cap (116, 116') and the support structure (114) and a slot part (181) provided on the other element of the reagent container cap (116, 116') and the support structure (114), the key part (171) vertically protruding from an adjacent region of the one element (114) and the slot part (181) comprising two vertical surface portions (181f) facing each other and adapted to receive the key part (171) therebetween when the reagent container cap (116, 116') is fitted to the support-structure (114).

14. Reagent kit (110) according to claim 12 or 13,
wherein the reagent container cap (116, 116') of the single reagent container unit or of at least one of the plurality of reagent container units (103, 103') is adapted to being mounted to the support structure (114) from above, wherein one element (114) of this reagent container cap (116, 116') and the support structure (114) comprises a deformation protrusion arrangement (190) and the other element (116, 116') comprises a deformation zone (194, 194') associated to the deformation protrusion arrangement (190, 190'), wherein the associated deformation zone (194, 194') is adapted to being deformed by the deformation protrusion arrangement (190, 190') when the reagent container cap (116, 116') is mounted to the support structure (114).

## Patentansprüche

1. Reagenzbehälterkappe (116), die ausgelegt ist, um an einem Reagenzbehälter (118) befestigt und mindestens nach einem anfänglichen Öffnen der Kappe (116) zwischen einem geöffneten Zustand und einem geschlossenen Zustand eingestellt zu werden,
wobei die Reagenzbehälterkappe (116) einen Kappeninnenraum (109) definiert und eine Kappenöffnung (116o) aufweist, die Zugang zu dem Kappeninnenraum (109) von oben ermöglicht, wenn sich die Kappe (116) im geöffneten Zustand und unter normalen Betriebsbedingungen befindet, unter denen die Kappe (116) vertikal ausgerichtet ist, sodass die Kappenöffnung nach oben zeigt (116); und wobei im geschlossenen Zustand der Kappe (116) unter normalen Betriebsbedingungen der Kappeninnenraum (109) nur in Richtung einer Unterseite (116b) offen ist,
wobei die Reagenzbehälterkappe (116) einen Hauptabschnitt (116m) und einen Einfügeabschnitt (116i) umfasst, die dauerhaft miteinander verbunden und aus verschiedenen Materialien gefertigt sind, wobei, wenn sich die Kappe (116) im geschlossenen Zustand befindet, der Kappeninnenraum (109) eine Region (109t) umfasst, die umfänglich und in Richtung der Oberseite dieser Region unter normalen Betriebsbedingungen vollständig und ausschließlich von Flächen des Einfügeabschnitts (116i) begrenzt ist,
wobei die Kappe (116) einen Ringspalt (116g) umfasst, der zwischen dem Einfügeabschnitt (116i) und dem Hauptabschnitt (116m) ausgebildet ist, wobei der Ringspalt (116g) zum Aufnehmen eines oberen Endes (118t) des Reagenzbehälters (118) ausgelegt ist.

2. Reagenzbehälterkappe (116) nach Anspruch 1,
wobei der Hauptabschnitt (116m) ein Hauptabschnittsmaterial umfasst und der Einfügeabschnitt (116i) ein Einfügeabschnittsmaterial umfasst, das flexibler ist als das Hauptabschnittsmaterial.

3. Reagenzbehälterkappe (116) nach Anspruch 2,
wobei das Hauptabschnittsmaterial Polypropylen ist und das Einfügeabschnittsmaterial ein thermoplastisches Olefin oder ein Polyethylen niederer Dichte ist.

4. Reagenzbehälterkappe (116) nach einem der vorstehenden Ansprüche,
wobei der Hauptabschnitt und der Einfügeabschnitt Verriegelungskonstruktionen (116ml, 116il, 120ml, 120il, 122ml, 122il) aufweisen, die zum Eingreifen ineinander ausgelegt sind, um den Hauptabschnitt (116m) und den Einfügeabschnitt (116i) fest miteinander zu verbinden.

5. Reagenzbehälterkappe (116) nach einem der vorstehenden Ansprüche,
wobei der Hauptabschnitt (116m) eine Befestigungskonstruktion (196), insbesondere eine Schnappkonstruktion (199) oder eine Gewindekonstruktion (198), aufweist, die zum Befestigen der Reagenzbehälterkappe (116) an einem Reagenzbehälter (118) von außen ausgelegt ist.

6. Reagenzbehälterkappe (116) nach einem der vorstehenden Ansprüche,
umfassend einen Kappenkörper (120) und einen Deckel (122), der so an diesen angelenkt ist, dass er um eine Schwenkachse (P) zwischen einer geschlossenen Position und einer geöffneten Position schwenkbar ist, um die Kappe (116) zwischen dem geschlossenen Zustand und dem geöffneten Zustand einzustellen,
wobei der Kappenkörper (120) einen Körperhauptabschnitt (120m) und einen Körpereinfügeabschnitt (120i) umfasst, die fest miteinander verbunden sind, wobei der Deckel (122) einen Deckelhauptabschnitt (122m) und einen Deckeleinfügeabschnitt (122i) umfasst, die fest miteinander verbunden sind, wobei der Hauptabschnitt (116m) der Reagenzbehälterkappe (116) den Körperhauptabschnitt (120m) und den Deckelhauptabschnitt (122m) umfasst und wobei der Einfügeabschnitt (116i) der Reagenzbehälterkappe (116) den Körpereinfügeabschnitt (120i) und den Deckeleinfügeabschnitt (122i) umfasst.

7. Reagenzbehälterkappe nach Anspruch 6,
wobei der Körpereinfügeabschnitt (120i) einen Halsabschnitt (121) umfasst, der die Kappenöffnung (116o) definiert, und der Deckeleinfügeabschnitt (122i) einen Pfropfabschnitt (122p) umfasst, der in den Halsabschnitt (121) eingefügt wird, wenn der Deckel (122) in die geschlossene Position geschwenkt wird.

8. Reagenzbehälterkappe (116) nach einem der Ansprüche 1 bis 5,
wobei der Einfügeabschnitt (116i) ein Verschlussteil (187) aufweist, das zum Perforieren und/oder Öffnen mit einer Nadel einer Pipettiervorrichtung eines Analyseapparates ausgelegt ist, um die Kappe (116) in den geöffneten Zustand einzustellen, wobei das Verschlussteil (187) ferner zum automatischen Einstellen der Kappe (116) in den geschlossenen Zustand nach dem Entfernen der Nadel ausgelegt ist.

9. Reagenzbehälterkappe (116) nach einem der vorstehenden Ansprüche,
wobei die Reagenzbehälterkappe (116) ferner zum Befestigen an einer Trägerkonstruktion (114) ausgelegt ist, wobei die Trägerkonstruktion (114) zum Aufnehmen mindestens eines Reagenzbehälters (118, 118') ausgelegt ist.

10. Reagenzbehältereinheit (103), umfassend:
einen Reagenzbehälter (118) mit einer Oberseitenöffnung (118o),
eine Reagenzbehälterkappe (116) nach einem der vorstehenden Ansprüche, wobei die Reagenzbehälterkappe (116) an dem Reagenzbehälter (118) befestigt oder befestigbar ist.

11. Reagenzbehältereinheit (103) nach Anspruch 10,
wobei der Reagenzbehälter (118) aus Glas gefertigt ist.

12. Reagenzkit (110), umfassend:
- eine Trägerkonstruktion (114),
- eine einzelne Reagenzbehältereinheit oder eine Vielzahl von Reagenzbehältereinheiten (103, 103'), die auf der Trägerkonstruktion (114) aufgenommen sind, wobei jede Reagenzbehältereinheit (103, 103) einen Reagenzbehälter (118, 118') und eine an diesem befestigte oder befestigbare Reagenzbehälterkappe (116, 116) umfasst, wobei die einzelne Reagenzbehältereinheit oder mindestens eine von der Vielzahl von Reagenzbehältereinheiten (103, 103') eine Reagenzbehältereinheit (103) mit den Merkmalen von Anspruch 10 oder 11 ist.

13. Reagenzkit (110) nach Anspruch 12,
wobei die Reagenzbehälterkappe (116, 116') der einzelnen Reagenzbehältereinheit oder der mindestens einen von der Vielzahl von Reagenzbehältereinheiten (103, 103') zum Aufsetzen auf die Trägerkonstruktion (114) von oben ausgelegt ist, wobei der Reagenzkit (110) eine Nut- und Federverbindung (170, 170') zwischen dieser Reagenzbehälterkappe (116, 116') und der Trägerkonstruktion (114) umfasst,
wobei die Nut- und Federverbindung (170, 170') ein Nutteil (171), das an einem Element (114) der Reagenzbehälterkappe (116, 116') und der Trägerkonstruktion (114) vorgesehen ist, und ein Federteil (181), das an dem anderen Element der Reagenzbehälterkappe (116, 116') und der Trägerkonstruktion (114) vorgesehen ist, umfasst,
wobei das Nutteil (171) vertikal von einer angrenzenden Region des einen Elements (114) absteht und das Federteil (181) zwei vertikale Flächenabschnitte (181f) umfasst, die einander zugewandt und zur Aufnahme des Nutteils (171) dazwischen ausgelegt sind, wenn die Reagenzbehälterkappe (116, 116') auf die Trägerkonstruktion (114) aufgesetzt ist.

14. Reagenzkit (110) nach Anspruch 12 oder 13,
wobei die Reagenzbehälterkappe (116, 116') der einzelnen Reagenzbehältereinheit oder der mindestens einen von der Vielzahl von Reagenzbehältereinheiten (103, 103') zum Befestigen an der Trägerkonstruktion (114) von oben ausgelegt ist, wobei ein Element (114) dieser Reagenzbehälterkappe (116, 116') und der Trägerkonstruktion (114) eine Verformungsvorsprunganordnung (190) umfasst und das andere Element (116, 116') eine Verformungszone (194, 194') umfasst, die mit der Verformungsvorsprunganordnung (190, 190') in Verbindung steht, wobei die damit verbundene Verformungszone (194, 194') zum Verformen durch die Verformungsvorsprunganordnung (190, 190') ausgelegt ist, wenn die Reagenzbehälterkappe (116, 116') an der Trägerkonstruktion (114) befestigt ist.

## Revendications

1. Couvercle de récipient de réactif (116) adapté pour être monté sur un récipient de réactif (118),
et pour être ajustable, au moins après une ouverture initiale du couvercle (116), entre un état ouvert et un état fermé,
dans lequel le couvercle de récipient de réactif (116) définit un espace intérieur de couvercle (109) et a une ouverture de couvercle (116o) permettant l'accès à l'espace intérieur de couvercle (109) depuis le dessus lorsque le couvercle (116) est dans l'état ouvert et dans des conditions de fonctionnement normales dans lesquelles le couvercle (116) est orienté verticalement de telle sorte que l'ouverture de couvercle est orientée (116) vers le haut ; et dans lequel, dans l'état fermé du couvercle (116) dans des conditions de fonctionnement normales, l'espace intérieur de couvercle (109) est ouvert uniquement vers un côté de fond (116b),
dans lequel le couvercle de récipient de réactif (116) comprend une partie principale (116m) et une partie d'insertion (116i) qui sont reliées de manière permanente l'une à l'autre et fabriquées à partir de matériaux différents, dans lequel, lorsque le couvercle (116) est dans l'état fermé, l'espace intérieur de couvercle (109) comprend une région (109t) qui est délimitée de manière circonférentielle et vers le côté supérieur de cette région dans des conditions de fonctionnement normales complètement et exclusivement par des surfaces de la partie d'insertion (116i),
dans lequel le couvercle (116) comprend un intervalle annulaire (116g) formé entre la partie d'insertion (116i) et la partie principale (116m), l'intervalle annulaire (116g) étant adapté pour accueillir une extrémité supérieure (118t) du récipient de réactif (118).

2. Couvercle de récipient de réactif (116) selon la revendication 1,
dans lequel la partie principale (116m) comprend un matériau de partie principale et la partie d'insertion (116i) comprend un matériau de partie d'insertion qui est plus souple que le matériau de partie principale.

3. Couvercle de récipient de réactif (116) selon la revendication 2,
dans lequel le matériau de partie principale est un polypropylène et le matériau de partie d'insertion est une oléfine thermoplastique ou un polyéthylène basse densité.

4. Couvercle de récipient de réactif (116) selon l'une quelconque des revendications précédentes, dans lequel la partie principale et la partie d'insertion ont des structures imbriquées (116ml, 116il, 120ml, 120il, 122ml, 122il) adaptées pour venir en prise les unes avec les autres afin de relier de manière fixe la partie principale (116m) et la partie d'insertion (116i).

5. Couvercle de récipient de réactif (116) selon l'une quelconque des revendications précédentes dans lequel la partie principale (116m) a une structure de fixation (196), en particulier une structure d'encliquetage (199) ou une structure de filetage (198), qui est adaptée pour fixer le couvercle de récipient de réactif (116) à un récipient de réactif (118) depuis l'extérieur.

6. Couvercle de récipient de réactif (116) selon l'une quelconque des revendications précédentes, comprenant un corps de couvercle (120) et une coiffe (122) articulée sur celui-ci de sorte à pouvoir pivoter autour d'un axe de pivotement (P) entre une position fermée et une position ouverte afin d'ajuster le couvercle (116) entre l'état fermé et l'état ouvert,
le corps de couvercle (120) comprenant une partie principale de corps (120m) et une partie d'insertion de corps (120i) reliées de manière fixe l'une à l'autre, la coiffe (122) comprenant une partie principale de coiffe (122m) et une partie d'insertion de coiffe (122i) reliées de manière fixe l'une à l'autre, dans lequel la partie principale (116m) du couvercle de récipient de réactif (116) comprend la partie principale de corps (120m) et la partie principale de coiffe (122m) et dans lequel la partie d'insertion (116i) du couvercle de récipient de réactif (116) comprend la partie d'insertion de corps (120i) et la partie d'insertion de coiffe (122i).

7. Couvercle de récipient de réactif selon la revendication 6, dans lequel la partie d'insertion de corps (120i) comprend une partie de col (121) définissant l'ouverture de couvercle (116o) et la partie d'insertion de coiffe (122i) comprend une partie de bouchon (122p) à insérer dans la partie de col (121) lors du pivotement de la coiffe (122) jusqu' à la position fermée.

8. Couvercle de récipient de réactif (116) selon l'une quelconque des revendications 1 à 5, dans lequel la partie d'insertion (116i) a une pièce de fermeture (187) adaptée pour être perforée et/ou ouverte par une aiguille d'un dispositif de pipetage d'un appareil analytique afin d'ajuster le couvercle (116) dans l'état ouvert, ladite pièce de fermeture (187) étant en outre adaptée pour ajuster automatiquement le couvercle (116) dans l'état fermé après le retrait de l'aiguille.

9. Couvercle de récipient de réactif (116) selon l'une quelconque des revendications précédentes, dans lequel le couvercle de récipient de réactif (116) est en outre adapté pour être monté sur une structure de support (114), la structure de support (114) étant adaptée pour accueillir au moins un récipient de réactif (118, 118').

10. Unité de récipient de réactif (103), comprenant :
un récipient de réactif (118) ayant une ouverture sur le côté supérieur (118o),
un couvercle de récipient de réactif (116) selon l'une quelconque des revendications précédentes, le couvercle de récipient de réactif (116) étant monté ou montable sur le récipient de réactif (118).

11. Unité de récipient de réactif (103) selon la revendication 10,
dans laquelle le récipient de réactif (118) est fabriqué en verre.

12. Trousse de réactif (110) comprenant :
- une structure de support (114),
- une unique unité de récipient de réactif ou une pluralité d'unités de récipient de réactif (103, 103') accueillies sur la structure de support (114), chaque unité de récipient de réactif (103, 103) comprenant un récipient de réactif (118, 118') et un couvercle de récipient de réactif (116, 116) monté ou montable sur celui-ci, dans laquelle l'unique unité de récipient de réactif ou au moins une de la pluralité d'unités de récipient de réactif (103, 103') est une unité de récipient de réactif (103) avec les caractéristiques de la revendication 10 ou 11.

13. Trousse de réactif (110) selon la revendication 12,
dans laquelle le couvercle de récipient de réactif (116, 116') de l'unique unité de récipient de réactif ou d'au moins une de la pluralité d'unités de récipient de réactif (103, 103') est adapté pour être ajusté sur la structure de support (114) depuis le dessus, la trousse de réactif (110) comprenant une jointure de type clé et serrure (170, 170') entre ce couvercle de récipient de réactif (116, 116') et la structure de support (114),
la jointure de type clé et serrure (170, 170') comprenant une pièce de clé (171) fournie sur un élément (114) parmi le couvercle de récipient de réactif (116, 116') et la structure de support (114) et une pièce de serrure (181) fournie sur l'autre élément parmi le couvercle de récipient de réactif (116, 116') et la structure de support (114),
la pièce de clé (171) faisant saillie verticalement depuis une région adjacente du premier élément (114) et la pièce de serrure (181) comprenant deux parties de surface (181f) verticales faisant face l'une à l'autre et adaptées pour recevoir la pièce de clé (171) entre elles lorsque le couvercle de récipient de réactif (116, 116') est ajusté sur la structure de support (114).

14. Trousse de réactif (110) selon la revendication 12 ou 13,
dans laquelle le couvercle de récipient de réactif (116, 116') de l'unique unité de récipient de réactif ou d'au moins une de la pluralité d'unités de récipient de réactif (103, 103') est adapté pour être monté sur la structure de support (114) depuis le dessus, dans laquelle un élément (114) parmi ce couvercle de récipient de réactif (116, 116') et la structure de support (114) comprend un agencement de saillie de déformation (190) et l'autre élément (116, 116') comprend une zone de déformation (194, 194') associée à l'agencement de saillie de déformation (190, 190'), dans laquelle la zone de déformation (194, 194') associée est adaptée pour être déformée par l'agencement de saillie de déformation (190, 190') lorsque le couvercle de récipient de réactif (116, 116') est monté sur la structure de support (114).
